# FASCICULE DE BREVET EUROPEEN

(11) **EP 4 556 664 B1**
(45) Date de publication et mention de la délivrance du brevet: **27.05.2026**
(21) Numéro de dépôt: 24211654.9
(22) Date de dépôt: 08.11.2024
(51) Int. Cl.: E05D 3/12, B60J 5/04, E05D 11/06, E05D 11/10

(54) **DISPOSITIF D'ACCÈS POUR UN VÉHICULE AUTOMOBILE AVEC DES PORTES ANTAGONISTES**
ZUGANGSVORRICHTUNG FÜR EIN KRAFTFAHRZEUG MIT ANTAGONISTISCHEN TÜREN
ACCESS DEVICE FOR A MOTOR VEHICLE WITH COUNTER-DOORS

(30) Priorité: 15.11.2023 FR 2312486
(43) Date de publication de la demande: 21.05.2025
(73) Titulaire: Renault s.a.s, 92100 Boulogne Billancourt (FR)
(72) Inventeur: CHEREAU, Pierre, 78280 Guyancourt (FR); DELPIERRE, Jerome, 78190 Trappes (FR)

(56) Documents cités:
- DE-A1- 102017 202 919
- FR-A1- 2 786 805
- US-A- 2 177 826
- US-A1- 2012 049 579
- US-B1- 6 386 621

## Description

L'invention concerne un dispositif d'accès pour un véhicule automobile avec des portes antagonistes. L'invention concerne également un véhicule ayant des portes antagonistes équipé d'un tel dispositif d'accès.

Les véhicules automobiles sont souvent équipés de dispositifs d'accès comprenant plusieurs portes sur un même côté d'une caisse du véhicule. Chaque porte est montée pivotante autour d'un axe sensiblement vertical. Généralement, les portes adjacentes sur un même côté de la caisse d'un véhicule s'ouvrent dans un même sens de rotation par rapport au véhicule. Ces portes adjacentes sont généralement montées chacune sur un pilier associé.

Il existe également des véhicules automobiles avec des dispositifs d'accès pour lesquels deux portes adjacentes sur un même côté de la caisse s'ouvrent dans des sens de rotation opposés. Une unique ouverture dans la caisse du véhicule peut alors être prévue, sans montant central entre les deux portes. L'axe de rotation d'une première porte s'étend le long d'un bord avant de l'ouverture tandis que l'axe de rotation de la porte arrière s'étend le long d'un bord arrière de l'ouverture. Ce type d'agencement, communément appelé « portes antagonistes » est généralement utilisé pour des camions, des véhicules utilitaires, ou des véhicules de sport comportant plus d'une rangée de sièges.

Dans cet agencement particulier, l'ouverture dans la caisse ne comprend pas de montant central entre une rangée de sièges avant et une rangée de sièges arrière. Afin d'apporter un soutien latéral au véhicule tout en offrant une étanchéité suffisante, les portes avant et arrière s'emboîtent généralement l'une dans l'autre lorsqu'elles sont en position fermée et apportent ainsi ensemble un soutien structurel.

Cependant, les portes agencées ainsi sont généralement conçues de manière que l'utilisateur doive ouvrir la porte située à l'avant avant d'être en mesure d'ouvrir ou de fermer la porte arrière. Ceci complique la sortie d'un passager arrière qui doit attendre que quelqu'un vienne ouvrir la porte avant. Dans certains cas, le passager arrière peut replier le siège à l'avant pour accéder lui-même au système de déverrouillage permettant de déverrouiller la porte avant, mais ce système l'oblige à effectuer plusieurs manipulations au préalable pour pouvoir dégager l'accès vers le système de déverrouillage.

Il existe également des véhicules automobiles avec des portes antagonistes équipé d'un système qui permet d'ouvrir lesdites portes indépendamment l'une de l'autre. La publication WO 2011/003190 A1 divulgue un système d'ouverture de portes antagonistes dans lequel la porte arrière est relié à un ensemble de charnières configuré pour se déplacer le long d'un rail coulissant de côté et vers l'arrière avant que la porte arrière ne puisse pivoter vers l'extérieur sur la charnière de la porte arrière. Toutefois, un tel système d'ouverture présente des inconvénients. En particulier, la répétabilité du mouvement d'ouverture et de fermeture de la porte arrière n'est pas forcément garantie, ce qui peut s'avérer problématique. En outre, l'étanchéité du véhicule avec des portes antagonistes équipées avec un tel système d'ouverture n'est pas forcément garantie non plus.

US 6 386 621 B1 et US 2012/049579 A1 divulguent un dispositif d'accès pour un véhicule automobile comprenant une première porte et une deuxième porte, la première porte et la deuxième porte étant configurées de manière antagoniste pour fermer une même ouverture.

Le but de l'invention est de fournir un dispositif d'accès pour un véhicule avec des portes antagonistes qui permet une sortie plus aisée pour un passager arrière tout en garantissant la répétabilité du mouvement d'ouverture et de fermeture de la porte sur le long terme ainsi que l'étanchéité au niveau de l'ouverture lorsque les portes antagonistes sont en position fermée.

A cet effet, l'invention, selon la revendication 1, porte sur un dispositif d'accès pour un véhicule automobile comprenant une première porte et une deuxième porte, la première porte et la deuxième porte étant configurées de manière antagoniste pour fermer une même ouverture, caractérisé en ce que le dispositif d'accès comprend une première charnière et une deuxième charnière comprenant chacune un premier charnon fixé sur une caisse du véhicule automobile et un deuxième charnon fixé sur la deuxième porte et un coude mobile en rotation par rapport au premier charnon autour d'un premier axe pivotant, le coude étant également mobile en rotation par rapport au deuxième charnon autour d'un deuxième axe pivotant de sorte qu'au cours d'une première phase d'ouverture de la deuxième porte, la deuxième porte pivote simultanément autour des premiers axes pivotants et des deuxièmes axes pivotants de la première charnière et de la deuxième charnière, entre une position de fermeture de la deuxième porte dans laquelle ladite deuxième porte est affleurante à la caisse du véhicule automobile et une position intermédiaire de la deuxième porte, dans laquelle ladite deuxième porte est écartée par rapport à la caisse du véhicule automobile.

Selon l'invention, au moins l'une des deux charnières comprend un mécanisme de blocage configuré pour bloquer une rotation autour d'un premier axe pivotant de l'une des charnières à la fin de la première phase d'ouverture, de sorte que lors d'une deuxième phase d'ouverture de la deuxième porte, la deuxième porte pivote uniquement autour des deuxièmes axes de pivot de la première charnière et de la deuxième charnière dans un mouvement de rotation entre la position intermédiaire de la deuxième porte et une position d'ouverture de la deuxième porte.

Selon l'invention, le mécanisme de blocage est porté par la première charnière.

Selon l'invention, le mécanisme de blocage comprend un pêne configuré pour coulisser en translation entre une position déverrouillée et une position verrouillée par rapport au coude de ladite première charnière. Dans la position verrouillée du pêne, une première extrémité du pêne coopère avec une surface d'accroche de la première charnière de sorte à bloquer la rotation du coude autour du premier axe pivotant.

Dans un mode de réalisation, au moins un organe élastique de rappel est en contact avec une surface d'appui du pêne de sorte à se déformer lorsque le pêne coulisse en translation par rapport au coude de la première charnière entre sa position déverrouillée et sa position verrouillée, ou inversement.

Dans un mode de réalisation, la première charnière comprend en outre un guide de pêne configuré pour guider le pêne dans sa translation entre sa position déverrouillée et sa position verrouillée ou inversement et le au moins un organe élastique de rappel est agencé entre le guide de pêne et le pêne.

Dans un mode de réalisation, le guide de pêne est fixé de manière démontable au coude de la première charnière.

Selon l'invention, le deuxième charnon de la première charnière comporte en outre une butée configurée pour exercer une pression contre le pêne lorsque la deuxième porte est dans sa position intermédiaire afin de déplacer le pêne en translation de sorte à découpler la première extrémité du pêne de la surface d'accroche.

Dans un mode de réalisation, le dispositif d'accès comprend une came de guidage mobile en rotation par rapport au premier charnon de la deuxième charnière et une face de la came de guidage comprend un premier creux et un deuxième creux configurés pour coopérer avec un pion porté par le coude de la deuxième charnière de sorte que lorsque la deuxième porte est déplacée entre sa position de fermeture et sa position intermédiaire, le pion est déplacé du premier creux vers le deuxième creux sur la face de la came de guidage.

Dans un mode de réalisation, un organe élastique de rappel est agencé entre la came de guidage et le premier charnon de la deuxième charnière.

Dans un mode de réalisation, les deuxièmes charnons de la première charnière et de la deuxième charnière comportent chacun une languette qui enveloppe au moins partiellement le deuxième axe pivotant respectif de chaque charnière.

L'invention concerne par ailleurs un véhicule automobile caractérisé en ce qu'il est équipé d'un dispositif d'accès tel que décrit précédemment.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre les différentes positions adoptées par la deuxième porte équipée d'un dispositif d'accès selon l'invention au cours d'une ouverture de ladite deuxième porte d'un véhicule automobile.
La figure 2 est une vue de détail d'un dispositif d'accès selon l'invention.
La figure 3 est une vue de détail de la première charnière du dispositif d'accès de la figure 2.
La figure 4 est une vue de détail de la deuxième charnière du dispositif d'accès de la figure 2.
La figure 5 illustre les différentes positions adoptées par la première charnière et la deuxième charnière du dispositif d'accès au cours d'une ouverture de la deuxième porte.
La figure 6 est une vue similaire à la figure 5 et illustre les différentes positions adoptées par la première charnière et la deuxième charnière du dispositif d'accès au cours d'une ouverture de la deuxième porte selon un autre point de vue.

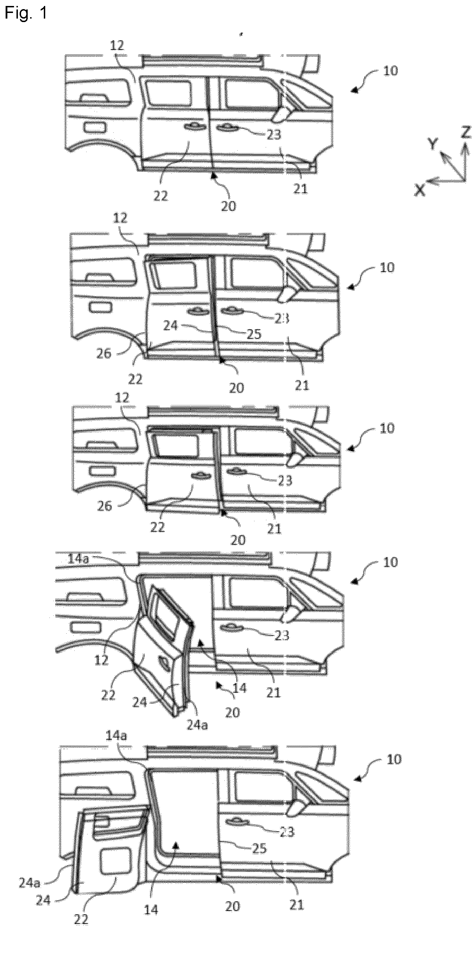

La figure 1 illustre une partie d'un véhicule automobile 10 comprenant une première porte 21 et une deuxième porte 22 qui sont agencées de manière antagoniste pour fermer une même ouverture 14 dans une caisse 12 du véhicule automobile 10. Le véhicule automobile 10 est équipé d'un dispositif d'accès 20 selon un mode de réalisation de l'invention qui permet d'ouvrir les portes 21, 22 indépendamment l'une de l'autre. Tout type de véhicule automobile 10 peut être envisagé dans le cadre de la présente invention. Un trièdre avec trois axes X, Y, Z est illustré sur cette figure 1.

Dans ce document, l'axe X désigne l'axe longitudinal du véhicule automobile 10. En marche avant et en ligne droite, le véhicule 10 progresse de l'arrière vers l'avant, selon une direction parallèle à son axe longitudinal. L'axe X est orienté de l'avant vers l'arrière du véhicule 10, c'est-à-dire dans le sens de la marche arrière. L'axe Y désigne l'axe transversal du véhicule 10. L'axe Y est orienté de la gauche vers la droite, la gauche et la droite étant définies selon le point de vue d'un conducteur du véhicule 10. L'axe Z désigne l'axe perpendiculaire à l'axe X et à l'axe Y. On considère que le véhicule 10 repose sur un sol horizontal. L'axe Z est un axe vertical, orienté de bas en haut. Les axes X, Y et Z forment un repère orthogonal. Ce même repère, défini par référence à un véhicule 10, sera aussi utilisé pour décrire le dispositif d'accès 20, même considéré hors du véhicule 10, puisqu'il est destiné à un montage selon une orientation spécifique dans le véhicule 10.

Le véhicule 10 automobile possède une paire de portes 21, 22 agencées sur un côté latéral de la caisse 12 du véhicule automobile 10. La paire de portes 21, 22 comprend une première porte 21 située à l'avant du véhicule automobile 10 et une deuxième porte 22 située à l'arrière du véhicule automobile 10. Les deux portes 21, 22 s'étendent parallèlement à l'axe longitudinal X du véhicule 10 lorsqu'elles sont en position fermée.

Toutefois, il est entendu que les caractéristiques de la première porte 21 située à l'avant décrites ici peuvent être incorporées dans une porte arrière 22 et que les caractéristiques de la deuxième porte 22 située à l'arrière décrites ici peuvent être incorporées dans une porte avant 21.

En outre, les caractéristiques de l'une ou l'autre des portes 21, 22 peuvent être incorporées dans n'importe quelle porte 21, 22, quelle que soit leur relation spatiale vers l'avant, vers l'arrière ou latérale par rapport au véhicule automobile. Par exemple, un tel dispositif d'accès 20 pour les portes 21, 22 peut être installé à l'arrière d'un véhicule 10, tel qu'un véhicule utilitaire sportif, un véhicule de transport de marchandises ou autre. Les deux portes 21, 22, pourraient ainsi s'étendre perpendiculairement à l'axe longitudinal X du véhicule 10 et parallèlement l'axe transversal Y lorsqu'elles sont en position fermée.

La caisse 12 comprend une ouverture 14 de porte qui est fermée dans une région centrale de l'ouverture 14 par la première porte 21 et la deuxième porte 22, comme illustré sur le premier cliché de la figure 1. La première porte 21 et la deuxième porte 22 sont donc configurées de manière antagoniste pour fermer cette même ouverture 14. Pour faciliter l'entrée et la sortie des occupants du véhicule 10, l'ouverture 14 de porte ne comporte pas de montant, c'est-à-dire qu'il n'y a pas de montant central divisant une rangée avant de sièges et une rangée arrière de sièges de l'habitacle. Il y a donc moins d'obstacles dans l'ouverture 14 qui est alors élargie pour permettre la montée et la descente des passagers dans l'habitacle, ce qui facilite l'entrée et la sortie du véhicule 10.

La première porte 21 est fixée au véhicule 10 par des charnières à proximité d'une zone avant du périmètre de l'ouverture 14. La première porte 21 est articulée à la caisse 12 du véhicule 10 autour d'un axe sensiblement vertical, de sorte que la première porte 21 peut être ouverte selon un premier sens d'ouverture.

La première porte 21 peut comprendre une poignée de porte extérieure 23 et une poignée de porte intérieure pour actionner en l'occurrence un éventuel dispositif de verrouillage qui désengage l'extrémité arrière 25 de la première porte 21 de la caisse 12.

La deuxième porte 22 peut être ouverte selon un deuxième sens d'ouverture opposé au premier sens d'ouverture de la première porte 21 afin d'atteindre une position ouverte. La deuxième porte 22 comporte une extrémité avant 24 située en vis-à-vis d'une extrémité arrière 25 de la première porte 21 lorsque les deux portes 21, 22 sont en position fermée. Sur cette extrémité avant peut figurer un joint d'étanchéité 24a, comme illustré sur la figure 1. Tel qu'illustré sur la figure 1, le joint d'étanchéité 24a s'étend tout le long de l'extrémité avant 24 de la deuxième porte 22. Lorsque les portes 21 et 22 sont fermées, ce joint d'étanchéité 24a est au moins partiellement écrasé par les portes 21 et 22, ce qui garantit l'étanchéité du véhicule 10 automobile.

Par ailleurs, au moins une portion de la périphérie de l'ouverture 14 peut comporter au moins un autre joint d'étanchéité 14a. Une portion de ce joint d'étanchéité 14a est visible sur les deux derniers clichés de la figure 1. Ce joint d'étanchéité 14a est par exemple monté sur la caisse 12 du véhicule 10 de sorte à équiper l'ensemble de la périphérie de l'ouverture 14. Lorsque les portes 21 et 22 sont fermées, ce joint d'étanchéité 14a est lui aussi au moins partiellement écrasé par les portes 21 et 22, ce qui garantit l'étanchéité du véhicule 10 automobile tout autour de l'ouverture 14.

La deuxième porte 22 comporte également une extrémité arrière 26 située à l'opposé de l'extrémité avant 24 de cette même deuxième porte 22. Sur le deuxième cliché de la figure 1, l'on observe que lors de l'ouverture de la deuxième porte 22, l'extrémité avant 24 de la deuxième porte 22 se situe toujours dans l'ouverture 14 tandis que l'extrémité arrière 26 est décalé latéralement par rapport à la caisse 12 du véhicule 10 automobile.

L'on remarque également que la deuxième porte 22 a un mouvement de recul vers l'arrière pour permettre un alignement de l'extrémité avant 24 de la deuxième porte 22 avec l'extrémité arrière 26, parallèlement à l'axe X. Ceci est notamment visible sur le troisième cliché de la figure 1.

Lorsque la deuxième porte 22 est pivotée pour lui permettre d'atteindre sa position d'ouverture, visible sur le cinquième et dernier cliché de la figure 1, l'axe de rotation se situe alors en-dehors de l'ouverture 14. Cet axe de rotation autour duquel pivote la deuxième porte 22 est donc décalé par rapport à la caisse 12 du véhicule 10 automobile.

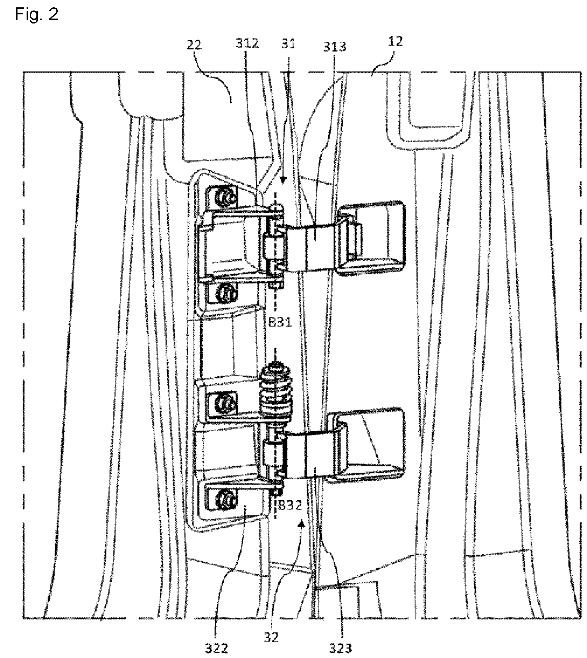

Ce mouvement particulier de la deuxième porte 22 est possible grâce au dispositif d'accès 20 qui permet d'ouvrir la deuxième porte 22 indépendamment de la première porte 21. Un mode de réalisation du dispositif d'accès 20 est illustré sur les figures 2, 5 et 6. Sur la figure 2, la deuxième porte 22 est représentée dans une position d'ouverture.

Le dispositif d'accès 20 comprend une première charnière 31 et une deuxième charnière 32, visibles sur les figures 2, 5 et 6. Chacune desdites charnières 31, 32 comprend respectivement un premier charnon 311, 321 fixé sur la caisse 12 du véhicule 10 automobile et un deuxième charnon 312, 322 fixé sur la deuxième porte 22. Par ailleurs, chacune desdites charnières 31, 32 comprend un coude 313, 323 mobile en rotation par rapport au premier charnon 311, 321 au moyen d'un premier axe A31, A32 pivotant. Chaque coude 313, 323 est également mobile en rotation par rapport au deuxième charnon 312, 322 au moyen d'un deuxième axe B31, B32 pivotant.

Les charnons 311, 312, 321 et 322 et les coudes 313, 323 respectifs de la première charnière 31 et de la deuxième charnière 32 peuvent notamment être des pièces métalliques.

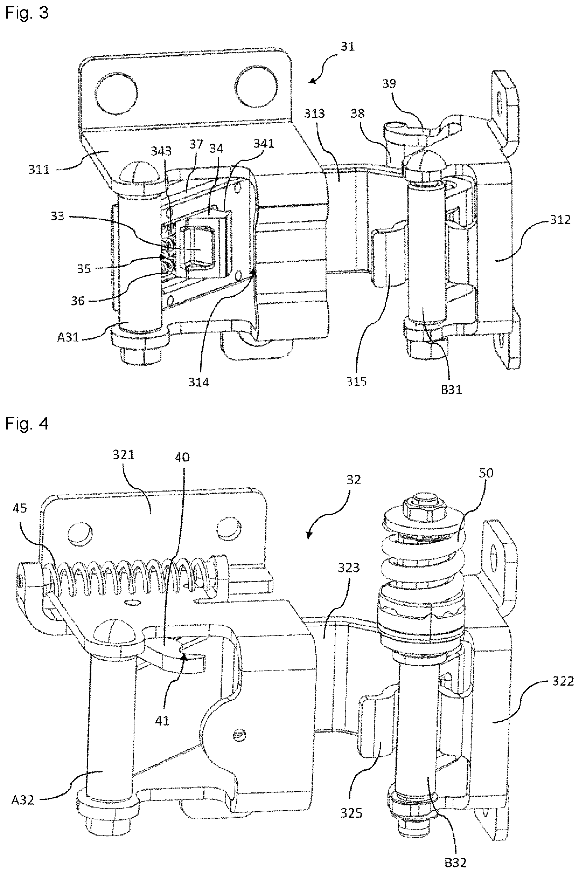

Les deuxièmes charnons 312, 322 de la première charnière 31 et de la deuxième charnière 32 peuvent chacun comporter une languette 315, 325 qui enveloppe au moins partiellement le deuxième axe B31, B32 pivotant respectif de chaque charnière 31, 32. Ces languettes 315 et 325 sont notamment visibles sur les figures 3 et 4 qui illustrent respectivement la première charnière 31 et la deuxième charnière 32. Chaque languette 315, 325 comporte un bord libre protubérant contre lequel une portion des coudes 313, 323 respectifs des charnière 31, 32 viennent en appui lorsque la deuxième 22 porte est dans sa position d'ouverture. Les bords libres protubérants des languettes 315, 325 forment ainsi une butée pour les coudes 313, 323 respectifs des charnières 31, 32.

Selon le mode de réalisation du dispositif d'accès 20 illustré sur la figure 2, la première charnière 31 et la deuxième charnière 32 se situent l'une au-dessus de l'autre suivant l'axe vertical Z. Dans ce mode de réalisation, le premier axe A31 de la première charnière 31 et le premier axe A32 de la deuxième charnière 32 sont parallèles entre eux, voire coaxiaux, de manière à définir ensemble une première liaison pivot. De même, le deuxième axe B31 de la première charnière 31 et le deuxième axe B32 de la deuxième charnière 32 peuvent être parallèles entre eux, voire coaxiaux, de manière à définir ensemble une deuxième liaison pivot. Par ailleurs, les premiers axes A31 et A32 sont parallèles aux deuxièmes axes B31 et B32. Autrement dit, tous les axes A31, A32, B31 et B32 sont parallèles entre eux.

Tel qu'illustré sur les figures 2, 5 et 6, la première charnière 31 est la charnière supérieure, elle se situe donc au-dessus de la deuxième charnière 32, qui est alors la charnière inférieure. Toutefois, l'emplacement des charnières 31, 32 peut être modifié, l'ordre des charnières peut par exemple être inversé. Ainsi, il est possible d'imaginer un dispositif d'accès 20 dans lequel la première charnière 31 est la charnière inférieure et où la deuxième charnière 32 est la charnière supérieure.

Dans le mode de réalisation illustré sur les figures 2, 5 et 6, les premiers axes A31, A32 pivotants peuvent se situer au niveau d'une première extrémité des coudes 313, 323 de charnière 31, 32 tandis que le deuxième axe B31, B32 pivotant peut se situer à une deuxième extrémité des coudes 313, 323 de charnière 31, 32.

Les coudes 313, 323 respectifs de la première charnière 31 et de la deuxième charnière 32 peuvent présenter une forme en « C ». Plus particulièrement, les coudes 313, 323 peuvent présenter plusieurs sections droites reliées entre elles de manière à former des angles d'inclinaison entre deux sections droites consécutives. Les angles d'inclinaison sont plus particulièrement des angles obtus ou des angles droits.

Les différents composants du dispositif d'accès 20 sont donc mobiles les uns par rapport aux autres pour permettre à la deuxième porte 22 située à l'arrière d'être ouverte indépendamment de la première porte 21 située à l'avant du véhicule. Autrement dit, le dispositif d'accès 20 contribue aux différentes phases du mouvement de la porte 22 illustrés sur les clichés de la figure 1.

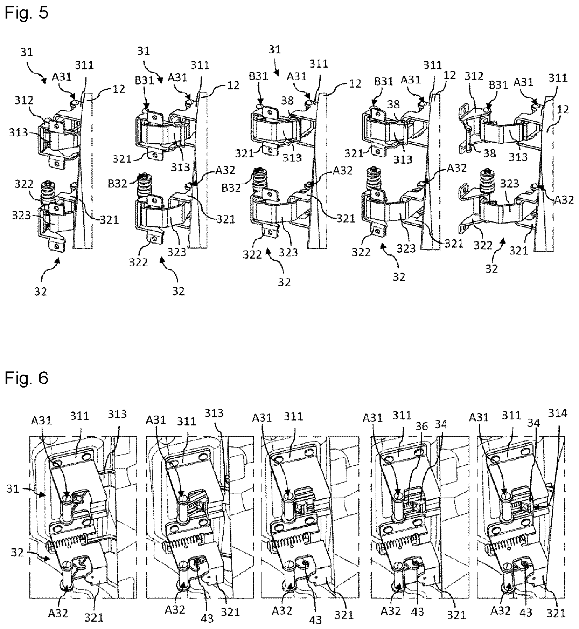

Les mouvements des différents composants du dispositif d'accès 20 sont illustrés sur les clichés des figures 5 et 6. Ainsi, sur les premiers clichés des figures 5 et 6, les charnières 31 et 32 sont représentées dans la position qu'elles adoptent lorsque la deuxième porte 22 est fermée. Sur les deuxièmes clichés des figures 5 et 6 les charnières 31 et 32 sont représentées dans la position qu'elles adoptent lorsque la deuxième porte 22 adopte la position illustrée sur le deuxième cliché de la figure 1, ceci correspond au début d'une première phase de mouvement d'ouverture de la deuxième porte 22. Sur les troisièmes clichés des figures 5 et 6, les charnières 31 et 32 sont représentées dans la position qu'elles adoptent lorsque la deuxième porte 22 adopte la position illustrée sur le troisième cliché de la figure 1, ceci correspond à la fin de la première phase de mouvement d'ouverture de la deuxième porte 22. Sur les quatrièmes clichés des figures 5 et 6, les charnières 31 et 32 sont représentées dans la position qu'elles adoptent lorsque la deuxième porte 22 adopte la position illustrée sur le quatrième cliché de la figure 1, ceci correspond au début d'une deuxième phase de mouvement d'ouverture de la deuxième porte 22. Enfin, sur les cinquièmes et derniers clichés des figures 5 et 6, les charnières 31 et 32 sont représentées dans la position qu'elles adoptent lorsque la deuxième porte 22 adopte la position ouverte illustrée sur le cinquième et dernier cliché de la figure 1, ceci correspond à la fin de la deuxième phase de mouvement d'ouverture de la deuxième porte 22.

Au cours de la première phase d'ouverture de la deuxième porte 22, celle-ci pivote simultanément autour des premiers axes A31, A32 pivotants et des deuxièmes axes B31, B32 pivotants de la première charnière 31 et de la deuxième charnière 32 dans son déplacement entre une position de fermeture de la deuxième porte 22 dans laquelle ladite deuxième porte 22 est affleurante à la caisse 12 du véhicule 10 automobile et une position intermédiaire de la deuxième porte 22, dans laquelle l'extrémité arrière 26 de la deuxième porte 22 est décalé latéralement par rapport à la caisse 12 du véhicule 10 automobile.

Autrement dit, c'est grâce au pivotement simultané autour des premiers axes A31, A32 pivotants et des deuxièmes axes B31, B32 pivotants de la première charnière 31 et de la deuxième charnière 32 que la deuxième porte 22 située à l'arrière peut être décalée latéralement et vers l'arrière par rapport à la caisse 12 du véhicule 10 automobile dans sa première phase d'ouverture. Au cours de cette première phase d'ouverture, le mouvement de la deuxième porte 22 s'apparente à une translation.

Dans une deuxième phase d'ouverture de la deuxième porte 22, la deuxième porte 22 pivote uniquement autour des deuxièmes axes B31, B32 pivotants de la première charnière 31 et de la deuxième charnière 32, dans un mouvement de rotation entre la position intermédiaire de la deuxième porte 22 et une position d'ouverture de la deuxième porte 22. Pour ce faire, au moins l'une des deux charnières 31, 32 comprend un mécanisme de blocage 33 configuré pour bloquer une rotation autour d'un premier axe A31, A32 pivotant de l'une des charnières 31, 32 à la fin de la première phase d'ouverture, préalablement à la deuxième phase d'ouverture.

Tel qu'illustré sur les figures 2, 5 et 6, le mécanisme de blocage 33 est porté par la première charnière 31, qui est en l'occurrence la charnière supérieure dans le mode de réalisation illustré. Un mode de réalisation préférentiel de la première charnière 31 avec le mécanisme de blocage 33 est illustré sur la figure 3.

Selon l'invention, le mécanisme de blocage 33 comprend un pêne 34 qui est configuré pour coulisser en translation par rapport au coude 313 de la première charnière 31. Plus particulièrement, le pêne 34 peut coulisser le long d'une section droite du coude 313 de la première charnière 31, notamment le long de la section droite du coude 313 qui est adjacente au premier axe pivotant A31 de la première charnière 31.

Tel qu'illustré sur la figure 3, le pêne 34 présente une forme en « L ». La branche longue du « L » lui permet de coulisser en translation rectiligne le long de la section droite du coude 313 qui est adjacente au premier axe pivotant A31 de la première charnière 31. Par ailleurs, ladite section droite du coude 313 peut comporter une ouverture 35 qui permet de laisser passer la branche courte du pêne 34 en forme de « L ». La branche courte du pêne 34 en forme de « L » peut être plus épaisse que la branche longue du « L ».

Le pêne 34 du mécanisme de blocage 33 peut coulisser en translation rectiligne entre une position déverrouillée et une position verrouillée. Le coulissement du pêne 34 est notamment illustré sur les deuxième, troisième et quatrième clichés de la figure 6. Dans la position verrouillée du pêne 34, visible sur le quatrième cliché et le cinquième cliché de la figure 6, une première extrémité 341 du pêne 34 coopère avec une surface d'accroche 314 de la première charnière 31 de sorte à bloquer la rotation du coude 313 autour du premier axe A31 pivotant. La première extrémité 341 du pêne 34 se situe notamment au bout de la branche courte du pêne 34 en forme de « L ». Lorsque le pêne atteint sa position verrouillée, ceci marque la fin de la première phase d'ouverture de la deuxième porte 22.

La première extrémité 341 du pêne 34 peut présenter un rebord qui lui confère une forme de crochet. Ce rebord permet au pêne 34 de coopérer avec la surface d'accroche 314 de la première charnière 31 de sorte à maintenir le coude 313 contre le premier charnon 311 afin de bloquer la rotation du coude 313 autour du premier axe A31 pivotant. La coopération entre la première extrémité 341 du pêne 34 et la surface d'accroche 314 de la première charnière 31 est plus particulièrement illustrée sur les quatrième et cinquième clichés de la figure 6.

Afin de garantir un maintien du pêne 34 dans sa position verrouillée, le mécanisme de blocage 33 peut comprendre au moins un organe élastique de rappel 36 qui est en contact avec une surface d'appui 343 du pêne 34. Ce au moins un organe élastique de rappel 36 contribue par ailleurs à la répétabilité du mouvement en translation du pêne 34.

L'organe élastique de rappel 36 peut se présenter sous la forme d'un ressort à spires hélicoïdales. Dans ce cas, c'est une extrémité du ressort qui est en contact avec la surface d'appui 343 du pêne 34.

Il peut y avoir un ou plusieurs ressorts. Dans le mode de réalisation illustré sur la figure 3, il y a par exemple trois ressorts qui sont agencés côte à côte. Les axes des ressorts sont parallèles à la direction selon laquelle le pêne 34 est destiné à se déplacer en translation.

La surface d'appui 343 qui est en contact avec le au moins un organe élastique de rappel 36 peut se situer à l'embranchement entre la branche longue et la branche courte du pêne 34 en forme de L. La surface d'appui 343 est notamment plane.

Lorsque le pêne 34 coulisse en translation par rapport au coude 313 de la première charnière 31 entre sa position déverrouillée et sa position verrouillée ou inversement, le au moins un organe élastique de rappel 36 est amené à se déformer.

Afin de protéger le pêne 34, la première charnière 31 peut en outre comprendre un guide de pêne 37 qui est configuré pour guider le pêne 34 dans sa translation entre sa position déverrouillée et sa position verrouillée ou inversement. Le guide de pêne 37 est par exemple agencé contre la section droite du coude 313 le long de laquelle se déplace le pêne 34. De cette façon, le guide de pêne 37 peut contribuer à la délimitation d'un volume de logement à l'intérieur duquel est agencé le pêne 34. Par ailleurs, le au moins un organe élastique de rappel 36 est alors agencé entre le pêne 34 et le guide de pêne 37, et plus précisément entre la surface d'appui 343 du pêne 34 et le guide de pêne 37.

Selon un mode de réalisation préférentiel, le guide de pêne 37 est fixé de manière démontable au coude 313 de la première charnière 31. De cette façon, le guide de pêne 37 peut être démonté, par exemple pour vérifier l'état d'usure du pêne 34 et/ou l'état d'usure du au moins un organe élastique 36. Un guide de pêne 37 fixé de manière démontable au coude 313 permet par ailleurs de remplacer aisément le pêne 34 et/ou au moins un organe élastique de rappel 36 défaillant ou abîmé sans devoir changer l'ensemble de la première charnière 31.

Dans le mode de réalisation illustré sur la figure 3, le deuxième charnon 312 de la première charnière 31 comporte en outre une butée 38 configurée pour exercer une pression contre le pêne 34 lorsque la deuxième porte 22 est dans sa position intermédiaire afin de déplacer le pêne 34 en translation de sorte à découpler la première extrémité 341 du pêne 34 de la surface d'accroche 314. Autrement dit, la butée 38 portée par le deuxième charnon 312 de la première charnière 31 permet d'une part de déplacer le pêne 34 en translation rectiligne au cours de la première phase d'ouverture de la deuxième porte 22 ; et d'autre part la butée 38 permet de débloquer le premier axe A31 pivotant lors de la fermeture de la deuxième porte 22. L'interaction entre la butée 38 du deuxième charnon 312 et le pêne 34 est notamment illustré sur les deuxième et troisième clichés de la figure 5.

Dans le mode de réalisation illustré sur la figure 3, la butée 38 se présente sous la forme d'une tige cylindrique. Les extrémités de cette butée 38 en forme de tige cylindrique sont solidaires du deuxième charnon 312 de la première charnière 31. Plus précisément, le deuxième charnon 312 de la première charnière 31 peut comporter au moins une et plus particulièrement deux pattes de maintien 39. Les extrémités de la butée 38 en forme de tige cylindrique peuvent notamment être encastrés dans des orifices situés au bout des pattes de maintien 39 du deuxième charnon 312 de la première charnière 31.

Au cours de la deuxième phase d'ouverture de la deuxième porte 22, celle-ci pivote autour des deuxièmes axes B31, B32 pivotants de la première charnière 31 et de la deuxième charnière 32. Pendant cette deuxième phase d'ouverture, les deuxièmes charnons 312 et 322, qui sont fixés sur la deuxième porte 22, sont donc amenés à pivoter autour desdits deuxièmes axes B31, B32 pivotants en même temps que la deuxième porte 22, ce qui induit également un déplacement de la butée 38 en forme de tige cylindrique autour desdits deuxièmes axes B31, B32 pivotants.

Ainsi, lorsque la deuxième porte 22 est déplacée depuis sa position ouverte vers sa position intermédiaire, la butée 38 en forme de tige cylindrique est également déplacée par rapport à la caisse 12 du véhicule 10 et par rapport au premiers charnons 311, 321 portés par ladite caisse 12 du véhicule 10. En particulier, lorsque la deuxième porte 22 atteint sa position intermédiaire, la butée 38 en forme de tige cylindrique vient en contact avec le pêne 34 et appuie contre celui-ci de manière à le déplacer en translation rectiligne. Sous l'effet de la pression exercée par la butée 38 contre le pêne 34, celui-ci est désolidarisé de la surface d'accroche 341 de la première charnière 31. Le pêne 34 est ainsi amené à quitter sa position de verrouillage, ce qui libère la rotation du coude 313 autour du premier axe A31 pivotant.

De cette façon, la deuxième porte 22 peut ensuite être amenée depuis sa position intermédiaire vers sa position de fermeture, étant donné que les coudes 313, 323 de la première charnière 31 et de la deuxième charnière peuvent à nouveau pivoter simultanément autour des premiers axes A31, A32 pivotants et des deuxièmes axes B31, B32 pivotants.

Un arrêt de porte 50 peut être porté par le deuxième charnon 322 de la deuxième charnière 32, comme illustré sur la figure 4. Cet arrêt de porte 50 permet de ralentir le mouvement de la deuxième porte 22 lorsqu'elle atteint des angles d'ouverture prédéfinis. L'arrêt de porte 50 permet d'agir à la manière d'un amortisseur.

Tel qu'illustré sur les figures 2, 4 et 5, l'arrêt de porte 50 peut être coaxial avec l'axe B31. L'arrêt de porte 50 s'étend alors parallèlement à l'axe vertical Z.

Le dispositif d'accès 20 peut en outre comprendre une came de guidage 40 qui est mobile en rotation par rapport au premier charnon 321 de la deuxième charnière 32. Ce mode de réalisation est plus particulièrement illustré sur la figure 4. La came de guidage 40 permet d'accompagner le mouvement de la porte arrière 22 dans sa première phase de mouvement.

Dans le mode de réalisation illustré sur la figure 4, une face de la came de guidage comprend un premier creux 41 et un deuxième creux (caché par le premier charnon 321 sur la figure 4). Le premier creux 41 et le deuxième creux de la face de la came de guidage 40 sont configurés pour coopérer avec un pion 43 porté par le coude 323 de la deuxième charnière 32 de sorte que lorsque la deuxième porte 22 translate entre sa position de fermeture et sa position intermédiaire, le pion 43 est déplacé du premier creux 41 vers le deuxième creux sur la face de la came de guidage 40. Le pion 43 est caché par le premier charnon 321 sur la figure 4. Le pion 43 est visible sur les deuxième, troisième, quatrième et cinquième clichés de la figure 6.

La forme de la came de guidage 40, en particulier le premier creux 41 et le deuxième creux sur sa surface de guidage, permet de garantir une fluidité du mouvement dans le déplacement du coude 323 et du deuxième charnon 322 par rapport au premier charnon 321 fixée sur la caisse 12 du véhicule 10. Lorsque le pion 43 porté par le coude 323 de la deuxième charnière 32 se loge dans le deuxième creux de la face de la came de guidage 40, ceci permet un arrêt franc du déplacement de la deuxième porte 22 dans sa position intermédiaire à la fin de la première phase du mouvement d'ouverture.

Cependant, et contrairement au mécanisme de blocage 33 porté par le première charnière 31, la coopération entre le pion 43 porté par le coude 323 de la deuxième charnière 32 et le deuxième creux de la face de la came de guidage 40 ne permet pas de bloquer la rotation de la deuxième charnière 32 autour du premier axe A32 de ladite charnière 32. Pendant la deuxième phase d'ouverture de la deuxième porte 22, le pion 43 reste logé dans le deuxième creux.

Dans le mode de réalisation illustré sur la figure 4, un organe élastique de rappel 45 est agencé entre la came de guidage 40 et le premier charnon 321 de la deuxième charnière 32. L'organe élastique de rappel 45 peut se présenter sous la forme d'un ressort à spires hélicoïdales. Dans ce cas, une extrémité dudit ressort est en contact avec la came de guidage 40 tandis qu'une autre extrémité du ressort est en contact le premier charnon 321 de la deuxième charnière 32. Tel qu'illustré sur la figure 4, l'axe de l'organe élastique de rappel 45 en forme de ressort à spires hélicoïdales s'étend parallèlement à l'axe longitudinal X.

L'organe élastique de rappel 45 contribue à la répétabilité du mouvement de la came de guidage 40 par rapport au premier charnon 321 de la deuxième charnière 32.

Il est ainsi possible de concevoir un dispositif d'ouverture 20 pour un véhicule automobile 10 qui comporte une première porte 21 et une deuxième porte 22 agencées de manière antagonistes de sorte que le dispositif d'ouverture 20 permettent l'ouverture indépendante de la deuxième porte 22 par rapport à la première porte 21 tout en assurant la répétabilité du mouvement d'ouverture et de fermeture de la deuxième porte 22 sur le long terme ainsi que l'étanchéité au niveau de l'ouverture 14 dans la caisse 12 lorsque les portes 21, 22 antagonistes sont en position fermée.

## Revendications

1. Dispositif d'accès (20) pour un véhicule (10) automobile comprenant une première porte (21) et une deuxième porte (22), la première porte (21) et la deuxième porte (22) étant configurées de manière antagoniste pour fermer une même ouverture (14), où le dispositif d'accès (20) comprend une première charnière (31) et une deuxième charnière (32) comprenant chacune un premier charnon (311, 321) configuré pour être fixé sur une caisse (12) du véhicule automobile (10) et un deuxième charnon (312, 322) configuré pour être fixé sur la deuxième porte (22) et un coude (313, 323) mobile en rotation par rapport au premier charnon (311, 321) autour d'un premier axe (A31, A32) pivotant, le coude (313, 323) étant également mobile en rotation par rapport au deuxième charnon (312, 322) autour d'un deuxième axe (B31, B32) pivotant de sorte qu'au cours d'une première phase d'ouverture de la deuxième porte (22), la deuxième porte (22) pivote simultanément autour des premiers axes (A31, A32) pivotants et des deuxièmes axes (B31, B32) pivotants de la première charnière (31) et de la deuxième charnière (32), entre une position de fermeture de la deuxième porte (22) dans laquelle ladite deuxième porte (22) est affleurante à la caisse (12) du véhicule (10) automobile et une position intermédiaire de la deuxième porte (22), dans laquelle ladite deuxième porte (22) est écartée par rapport à la caisse (12) du véhicule (10) automobile, au moins l'une des deux charnières (31) comprenant un mécanisme de blocage (33) configuré pour bloquer une rotation autour d'un premier axe (A31, A32) pivotant de l'une des charnières (31, 32) à la fin de la première phase d'ouverture, de sorte que lors d'une deuxième phase d'ouverture de la deuxième porte (22), la deuxième porte (22) pivotant uniquement autour des deuxièmes axes (B31, B32) de pivot de la première charnière (31) et de la deuxième charnière (32) dans un mouvement de rotation entre la position intermédiaire de la deuxième porte (22) et une position d'ouverture de la deuxième porte (22), le mécanisme de blocage (33) étant porté par la première charnière (31), ledit dispositif d'accès étant **caractérisé en ce que** ledit mécanisme de blocage (33) comprend un pêne (34) configuré pour coulisser en translation entre une position déverrouillée et une position verrouillée par rapport au coude (313) de ladite première charnière (31), dans la position verrouillée du pêne (34), une première extrémité (341) du pêne (34) coopère avec une surface d'accroche (314) de la première charnière (31) de sorte à bloquer la rotation du coude (313) autour du premier axe (A31) pivotant, le deuxième charnon (312) de la première charnière (31) comportant en outre une butée (38) configurée pour exercer une pression contre le pêne (34) lorsque la deuxième porte (22) est dans sa position intermédiaire afin de déplacer le pêne (34) en translation de sorte à découpler la première extrémité (341) du pêne (34) de la surface d'accroche (314).

2. Dispositif d'accès selon la revendication précédente, **caractérisé en ce qu'**au moins un organe élastique de rappel (36) est en contact avec une surface d'appui (343) du pêne (34) de sorte à se déformer lorsque le pêne (34) coulisse en translation par rapport au coude (313) de la première charnière (31) entre sa position déverrouillée et sa position verrouillée, ou inversement.

3. Dispositif d'accès selon la revendication précédente, **caractérisé en ce que** la première charnière (31) comprend en outre un guide de pêne (37) configuré pour guider le pêne (34) dans sa translation entre sa position déverrouillée et sa position verrouillée ou inversement et **en ce que** le au moins un organe élastique de rappel (36) est agencé entre le guide de pêne (37) et le pêne (34).

4. Dispositif d'accès selon la revendication précédente, **caractérisé en ce que** le guide de pêne (37) est fixé de manière démontable au coude (313) de la première charnière (31).

5. Dispositif d'accès selon l'une des revendications précédentes, **caractérisé en ce qu'**il comprend une came de guidage (40) mobile en rotation par rapport au premier charnon (321) de la deuxième charnière (32) et **en ce qu'**une face de la came de guidage (40) comprend un premier creux (41) et un deuxième creux configurés pour coopérer avec un pion (43) porté par le coude (323) de la deuxième charnière (32) de sorte que lorsque la deuxième porte (22) est déplacée entre sa position de fermeture et sa position intermédiaire, le pion (43) est déplacé du premier creux (41) vers le deuxième creux sur la face de la came de guidage (40).

6. Dispositif d'accès selon la revendication précédente, **caractérisé en ce qu'**un organe élastique de rappel (45) est agencé entre la came de guidage (40) et le premier charnon (321) de la deuxième charnière (32).

7. Dispositif d'accès selon l'une des revendications précédentes, **caractérisé en ce que** les deuxièmes charnons (312, 322) de la première charnière (31) et de la deuxième charnière (32) comportent chacun une languette (315, 325) qui enveloppe au moins partiellement le deuxième axe (B31, B32) pivotant respectif de chaque charnière (31, 32).

8. Véhicule automobile (10), **caractérisé en ce qu'**il est équipé d'un dispositif d'accès (20) selon l'une des revendications précédentes.

## Patentansprüche

1. Zugangsvorrichtung (20) für ein Kraftfahrzeug (10) mit einer ersten Tür (21) und einer zweiten Tür (22), wobei die erste Tür (21) und die zweite Tür (22) gegensätzlich konfiguriert sind, um ein und dieselbe Öffnung (14) zu schließen, wobei die Zugangsvorrichtung (20) ein erstes Scharnier (31) und ein zweites Scharnier (32) umfasst, die jeweils einen ersten Scharnierflügel (311, 321) umfassen, der dazu konfiguriert ist, an einer Karosserie (12) des Kraftfahrzeugs (10) befestigt zu sein, und einen zweiten Scharnierflügel (312, 322), der dazu konfiguriert ist, an der zweiten Tür (22) befestigt zu sein, und ein Winkelstück (313, 323), das in Bezug auf den ersten Scharnierflügel (311, 321) um eine erste Achse (A31, A32) drehbar ist, wobei das Winkelstück (313, 323) auch in Bezug auf den zweiten Scharnierflügel (312, 322) um eine zweite Achse (B31, B32) drehbar ist, sodass sich die zweite Tür (22) während einer ersten Phase des Öffnens der zweiten Tür (22) gleichzeitig um die ersten Schwenkachsen (A31, A32) und die zweiten Schwenkachsen (B31, B32) des ersten Scharniers (31) und des zweiten Scharniers (32) zwischen einer Schließposition der zweiten Tür (22), in der die zweite Tür (22) an der Karosserie (12) des Kraftfahrzeugs (10) anliegt, und einer Zwischenposition der zweiten Tür (22), in der die zweite Tür (22) in Bezug auf die Karosserie (12) des Kraftfahrzeugs (10) beabstandet ist, dreht, wobei mindestens eines der beiden Scharniere (31) einen Blockiermechanismus (33) umfasst, der dazu konfiguriert ist, eine Drehung eines der Scharniere (31, 32) um eine erste Schwenkachse (A31, A32) am Ende der ersten Öffnungsphase zu blockieren, so dass sich die zweite Tür (22) während einer zweiten Phase des Öffnens der zweiten Tür (22) ausschließlich um die zweiten Schwenkachsen (B31, B32) des ersten Scharniers (31) und des zweiten Scharniers (32) in einer Drehbewegung zwischen der Zwischenposition der zweiten Tür (22) und der Öffnungsposition der zweiten Tür (22) dreht, wobei der Blockiermechanismus (33) vom ersten Scharnier (31) getragen wird, wobei die Zugangsvorrichtung **dadurch gekennzeichnet ist, dass** der Blockiermechanismus (33) einen Riegel (34) umfasst, der dazu konfiguriert ist, zwischen einer entriegelten Position und einer verriegelten Position in Bezug auf das Winkelstück (313) des ersten Scharniers (31) translatorisch zu gleiten, wobei in der verriegelten Position des Riegels (34) ein erstes Ende (341) des Riegels (34) mit einer Einhakfläche (314) des ersten Scharniers (31) zusammenwirkt, um die Drehung des Winkelstücks (313) um die erste Schwenkachse (A31) zu blockieren, wobei der zweite Scharnierflügel (312) des ersten Scharniers (31) ferner einen Anschlag (38) aufweist, der dazu konfiguriert ist, einen Druck gegen den Riegel (34) auszuüben, wenn sich die zweite Tür (22) in ihrer Zwischenposition befindet, um den Riegel (34) translatorisch zu bewegen, so dass das erste Ende (341) des Riegels (34) von der Einhakfläche (314) entkoppelt wird.

2. Zugangsvorrichtung nach dem vorangehenden Anspruch, **dadurch gekennzeichnet, dass** mindestens ein elastisches Rückstellorgan (36) mit einer Auflagefläche (343) des Riegels (34) in Kontakt steht, so dass es sich verformt, wenn der Riegel (34) in Bezug auf das Winkelstück (313) des ersten Scharniers (31) zwischen seiner entriegelten Position und seiner verriegelten Position oder umgekehrt translatorisch gleitet.

3. Zugangsvorrichtung nach dem vorangehenden Anspruch, **dadurch gekennzeichnet, dass** das erste Scharnier (31) ferner eine Riegelführung (37) umfasst, die dazu konfiguriert ist, den Riegel (34) bei seiner Translation zwischen seiner entriegelten Position und seiner verriegelten Position oder umgekehrt zu führen, und dass das mindestens eine elastische Rückstellorgan (36) zwischen der Riegelführung (37) und dem Riegel (34) angeordnet ist.

4. Zugangsvorrichtung nach dem vorangehenden Anspruch, **dadurch gekennzeichnet, dass** die Riegelführung (37) abnehmbar am Winkelstück (313) des ersten Scharniers (31) befestigt ist.

5. Zugangsvorrichtung nach einem der vorangehenden Ansprüche, **dadurch gekennzeichnet, dass** sie einen Führungsnocken (40) umfasst, der in Bezug auf den ersten Scharnierflügel (321) des zweiten Scharniers (32) drehbar ist, und dass eine Seite des Führungsnockens (40) eine erste Vertiefung (41) und eine zweite Vertiefung umfasst, die dazu konfiguriert sind, mit einem durch das Winkelstück (323) des zweiten Scharniers (32) getragenen Stift (43) zusammenzuwirken, sodass, wenn die zweite Tür (22) zwischen ihrer Schließposition und ihrer Zwischenposition bewegt wird, der Stift (43) von der ersten Vertiefung (41) zur zweiten Vertiefung auf der Seite des Führungsnockens (40) bewegt wird.

6. Zugangsvorrichtung nach dem vorangehenden Anspruch, **dadurch gekennzeichnet, dass** zwischen dem Führungsnocken (40) und dem ersten Scharnierflügel (321) des zweiten Scharniers (32) ein elastisches Rückstellorgan (45) angeordnet ist.

7. Zugangsvorrichtung nach einem der vorangehenden Ansprüche, **dadurch gekennzeichnet, dass** die zweiten Scharnierflügel (312, 322) des ersten Scharniers (31) und des zweiten Scharniers (32) jeweils eine Zunge (315, 325) aufweisen, die zumindest teilweise die jeweilige zweite Schwenkachse (B31, B32) jedes Scharniers (31, 32) umschließt.

8. Kraftfahrzeug (10), **dadurch gekennzeichnet, dass** es mit einer Zugangsvorrichtung (20) nach einem der vorangehenden Ansprüche ausgestattet ist.

## Claims

1. Access device (20) for a motor vehicle (10) comprising a first door (21) and a second door (22), the first door (21) and the second door (22) being configured as a front- and a rear-hinged door for closing one same opening (14), wherein the access device (20) comprises a first hinge (31) and a second hinge (32) each comprising a first hinge knuckle (311, 321) configured to be fixed to a body (12) of the motor vehicle (10) and a second hinge knuckle (312, 322) configured to be fixed to the second door (22) and an elbow (313, 323) which is rotatable in relation to the first hinge knuckle (311, 321) about a first pivot axis (A31, A32), the elbow (313, 323) also being rotatable in relation to the second hinge knuckle (312, 322) about a second pivot axis (B31, B32) such that, during a first opening phase of the second door (22), the second door (22) pivots simultaneously about the first pivot axes (A31, A32) and the second pivot axes (B31, B32) of the first hinge (31) and the second hinge (32), between a closed position of the second door (22) in which said second door (22) lies flush with the body (12) of the motor vehicle (10) and an intermediate position of the second door (22), in which said second door (22) is spaced apart from the body (12) of the motor vehicle (10), at least one of the two hinges (31) comprising a blocking mechanism (33) configured to block a rotation about a first pivot axis (A31, A32) of one of the hinges (31, 32) at the end of the first opening phase, such that, during a second opening phase of the second door (22), the second door (22) pivots solely about the second pivot axes (B31, B32) of the first hinge (31) and the second hinge (32) in a rotational movement between the intermediate position of the second door (22) and an open position of the second door (22), the blocking mechanism (33) being borne by the first hinge (31), said access device being **characterized in that** said blocking mechanism (33) comprises a bolt (34) configured to translationally slide between an unlocked position and a locked position with respect to the elbow (313) of said first hinge (31), in the locked position of the bolt (34), a first end (341) of the bolt (34) cooperates with a catching surface (314) of the first hinge (31) so as to block the rotation of the elbow (313) about the first pivot axis (A31), the second hinge knuckle (312) of the first hinge (31) also having an end stop (38) configured to exert a pressure against the bolt (34) when the second door (22) is in its intermediate position in order to translationally move the bolt (34) so as to uncouple the first end (341) of the bolt (34) from the catching surface (314).

2. Access device according to the preceding claim, **characterized in that** at least one elastic return member (36) is in contact with a bearing surface (343) of the bolt (34) so as to deform when the bolt (34) translationally slides in relation to the elbow (313) of the first hinge (31) between its unlocked position and its locked position, or vice versa.

3. Access device according to the preceding claim, **characterized in that** the first hinge (31) further comprises a bolt guide (37) configured to guide the bolt (34) as the latter translationally moves between its unlocked position and its locked position or vice versa and **in that** the at least one elastic return member (36) is arranged between the bolt guide (37) and the bolt (34).

4. Access device according to the preceding claim, **characterized in that** the bolt guide (37) is removably fixed to the elbow (313) of the first hinge (31).

5. Access device according to one of the preceding claims, **characterized in that** it comprises a guide cam (40) which is rotatable in relation to the first hinge knuckle (321) of the second hinge (32) and **in that** a face of the guide cam (40) comprises a first recess (41) and a second recess which are configured to cooperate with a pin (43) borne by the elbow (323) of the second hinge (32) such that, when the second door (22) is moved between its closed position and its intermediate position, the pin (43) is moved from the first recess (41) to the second recess on the face of the guide cam (40).

6. Access device according to the preceding claim, **characterized in that** an elastic return member (45) is arranged between the guide cam (40) and the first hinge knuckle (321) of the second hinge (32).

7. Access device according to one of the preceding claims, **characterized in that** the second hinge knuckles (312, 322) of the first hinge (31) and the second hinge (32) each have a tab (315, 325) which goes at least partially around the respective second pivot axis (B31, B32) of each hinge (31, 32).

8. Motor vehicle (10), **characterized in that** it is fitted with an access device (20) according to one of the preceding claims.
